# EUROPEAN PATENT SPECIFICATION

(11) **EP 2 182 621 B1**
(45) Date of publication and mention of the grant of the patent: **06.06.2012**
(21) Application number: 08019065.5
(22) Date of filing: 31.10.2008
(51) Int. Cl.: H02P 6/00, H02P 25/06, H02K 41/03

(54) **Method and apparatus for controlling a linear motion system**
Verfahren und Vorrichtung zur Steuerung eines linearen Bewegungssystems
Procédé et appareil de contrôle d'un système de mouvement linéaire

(43) Date of publication of application: 05.05.2010
(73) Proprietor: Robert Bosch GmbH, 70469 Stuttgart (DE)
(72) Inventor: Dirkx, Walrick, 5641 JT Eindhoven (NL); Pancras, Wilco, 5612 KG Eindhoven (NL)

(56) References cited:
- EP-A- 1 977 893
- DE-A1- 10 334 736

## Description

### Field of the Invention

The invention relates to a method and an apparatus for controlling a linear motion system having a linear synchronous motor, to a corresponding computer program, and to a corresponding computer program product.

### Prior Art

Linear synchronous motors comprise a longitudinal stator on which at least one translator is freely moveable. A magnetic travelling-field is generated for moving the translator(s). The stator includes separate coil units, each comprising at least one coil. Usually, the magnetic travelling-field is generated by applying a three-phase current to said coil units. One example of a well known linear motor is disclosed in DE 39 00 511 A1. A current with variable frequency and amplitude is applied to the coil units of the longitudinal stator depending on the actual location of the translator, in order to move the translator relative to the stator.

NL 1024992 discloses a prior art linear motion system, which comprises an apparatus for moving carriers in a circulating transport circuit using magnetic movement devices, which comprise magnetic units working together and controllable coil units. Such an apparatus is often used in automated and specific product facilities, where a product is placed on the product carrier. During the circulation through the transport circuit, the product has to undergo several similar process steps. An application of such an apparatus relates to a semiconductor substrate placed on a product carrier, where various ultra-thin layers are to be deposited (e.g. chemical or physical vapour deposition CVD/PVD).

In such an application field, precise control of the movement of the various product carriers through the circulating transport circuit is essential for the correct performance of the various process actions on the products placed on the product carriers. Magnetic movement devices are used to move the product carriers through the transport circuit, particularly where very high requirements are set for the accuracy of the various process actions, such as the placement of an electronic component or the deposition of a semiconductor layer on a substrate.

The movement occurs without contact and without detrimental influences that can disturb the movement of the product carriers through the transport circuit, with the possibility to manipulate different product carriers independently of each other. The apparatus corresponding to the prior art comprises sensor devices, which are provided to detect the movement of at least one product carrier and on the basis thereof to generate a detection signal that varies with position, i.e. in case of movement. This detection signal is used to activate the movement devices for the accurate positioning of the product carrier in the transport circuit. This, in combination with the independently controllable coil units, allows for an activation of each product carrier separately and for movement/position of each product carrier independently of the other product carriers. However, in certain cases, the flexibility of the LMS can lead to problems. It is not possible, for instance, to control two carriers at different velocities with one coil. Furthermore, one carrier unit can be within the interaction or control range of e.g. two coil units, and it has to be decided which coil unit is closer to this carrier.

EP 1 977 893 A2 discloses a conveyor system and a method of operation. To avoid collisions of adjacent carriers with each other, a specific portion of the entire transport path may be defined for each carrier, the carrier being able to carry out individual displacements in the portion it is in, with the system operated so that there is normally never more than one carrier in a portion at a time.

DE 10 334 736 A1 discloses a linear motor with advancement or motion regulation for use in industrial automated processes, with a bearing unit for guiding a secondary component along the desired path.

In view of this prior art, it is an object of the invention to provide a method and an apparatus for controlling such a linear motion system so that a conflict handling is provided.

The invention is precisely defined in method claim 1 and apparatus claim 8. The dependent claims recite advantageous embodiments, procedures and implementation details of the invention.

In the drawings:
- Figure 1: shows a schematic plan view of a linear motion system suitable for use with the present invention;
- Figure 2: shows a schematic side view of the linear motion system of figure 1;
- Figure 3a: shows a schematic side view of the linear motion system of figure 2 indicating the control range of a coil unit;
- Figure 3b: shows a schematic side view of the linear motion system of figure 2 indicating the overlap range of two coil units; and
- Figure 4: shows a diagram, wherein different handling strategies are viewed as a function of the position of two neighbouring carrier units.

Like parts are indicated with identical reference numbers in the description below for a better understanding of the invention. Furthermore, for the sake of perceptibility of the figures, not all elements therein are designated with reference numbers.

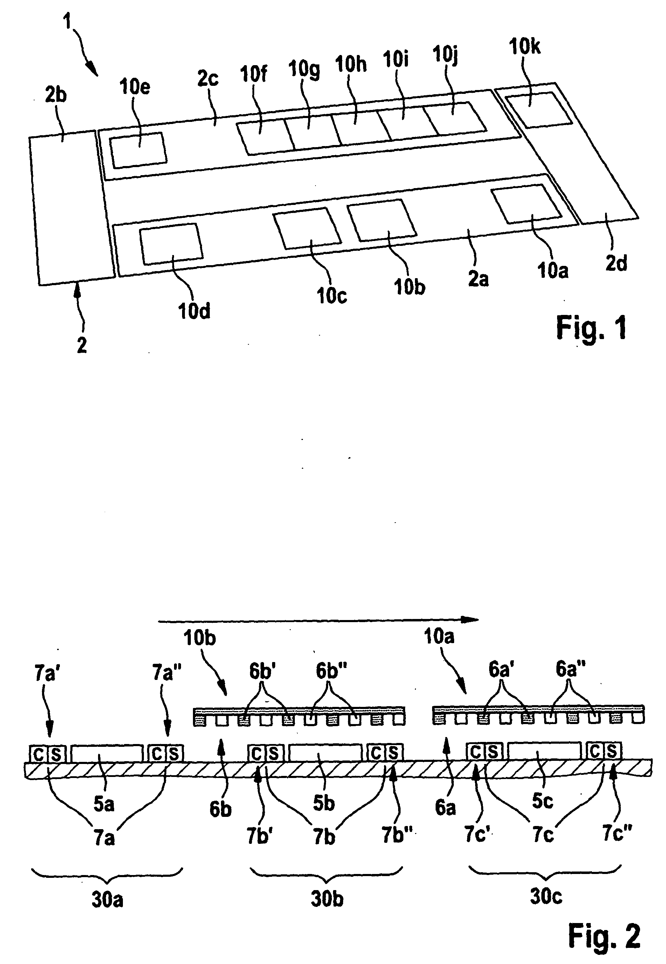

Figure 1 shows a schematic plan view of a linear motion system (LMS) suitable for use with the present invention. LMS 1 comprises a frame that forms a transport circuit 2, including different stators being formed as transport segments 2a, 2b, 2c and 2d. Various carrier units 10a-10k are placed movably above the circulating transport circuit 2a-2d.

Various products (not shown) can be placed on the carriers 10a-10k, which can undergo various process steps during the circulating movement through the transport circuit 2. For example, the products placed on the carrier units 10a-10k can include electronic printed boards, on which the various electronic components must be placed. In another application, the products can be semiconductor substrates, whereon various thin metallic or semiconductor layers are deposited during various processing steps, e.g. the manufacture of solar cells, chips, or LEDs.

Figure 2 shows a schematic side view of a detail of the linear motion system of figure 1 including magnetic based transport devices. For this purpose, a number of coil units 30a, 30b, 30c, etc. including coils 5a, 5b, 5c, etc. and sensor units 7a, 7b, 7c, etc., respectively, are installed in the transport circuit 2 and in the transport direction of the product carriers 10a-10k. The coil units 30a, 30b, 30c, etc. interact with magnetic units 6a, 6b, etc, which have been fitted on each product carrier 10a, 10b, etc. The magnetic units 6a, 6b, etc, are composed of an array or a series of alternating poled magnets. The alternating poled magnets of each magnetic unit 6a, 6b, etc. on each product carrier are designated 6a', 6a" (for product carrier 10a) ; 6b', 6b" (for product carrier 10b) ; etc.

By sequentially activating the coil units 30a, 30b, 30c, etc. in a specific way, the product carriers 10a, 10b, etc. are moved through the transport circuit 2 by commutation and the magnetic action of the various alternating poled magnets (attraction and repulsion). The movement therefore occurs without contact, which improves the accuracy of the process actions that must be performed on the products placed on the product carriers 10a, 10b, etc.

In order to provide an improved and more versatile LMS, which is able to manipulate various product carriers 10a, 10b, etc. independently of each other and more particularly, to position them more accurately for the process actions to be performed, sensor devices 7a, 7b, 7c, etc. are provided, which are equipped to detect the movement of at least one of the product carriers 10a, 10b, etc. The sensor devices 7a, 7b, 7c, etc. are composed of various sensor units 7a', 7a", 7b', etc., which in this example are arranged, viewed in the transport direction of the product carriers, before and after a coil 5a, 5b, 5c, etc. As shown in Figure 2, each sensor unit 7a', 7a", 7b', etc. of the sensor devices 7a, 7b, 7c comprises two Hall sensors C and S.

The sensor units 7a', 7a", 7b', etc. generate a detection signal that varies with position when a product carrier 10a, 10b, etc. passes under the influence of the sequential series of the alternatingly poled magnets with the movement/position of the product carrier. The detection signal that varies with position is, for example, a voltage signal and, due to the two Hall sensors C and S used, both generate a sine-derived voltage signal with a mutual phase difference. This phase difference depends on the mutual distance between the Hall sensors C and S as well as the mutual distance between the alternatingly poled magnets.

The voltage signal respectively induced by the alternatingly poled magnets, which is generated by each of the Hall sensors C and S, on the one hand provides information concerning the direction of the moved product carrier and on the other hand is a measure of the position of the product carrier with respect to these Hall sensors (and therefore to the corresponding coil unit).

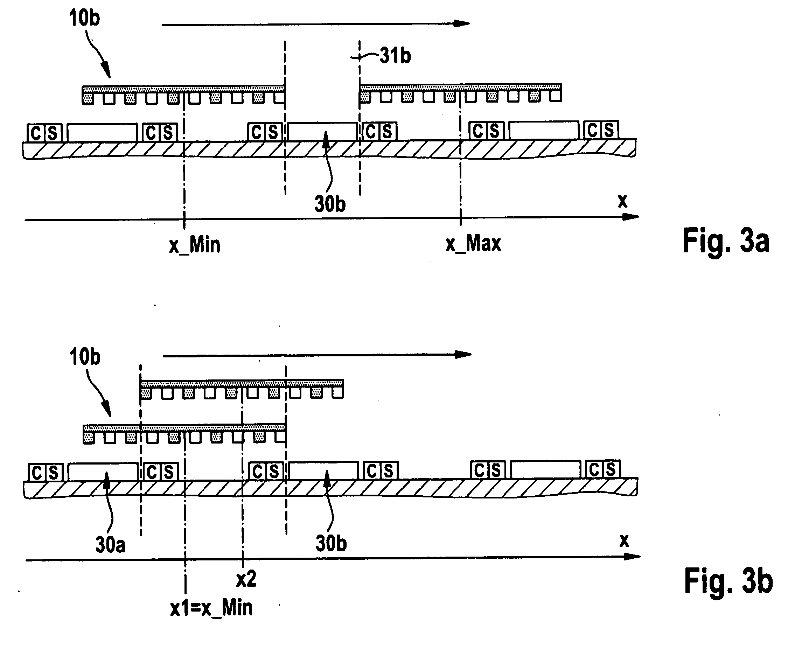

Figure 3a shows a schematic side view of the linear motion system of figure 2 indicating a control range of a coil unit. The direction of movement of the carrier units is designated on an axis x, wherein the position of the carrier is determined by the position of its centre. Carrier unit 10b enters the control range 31b of the coil unit 30b, when the position of the carrier unit 10b is greater than x_Min, and leaves the control range 31b of the coil unit 30b, when the position of the carrier unit 10b is greater than x_Max. Therefore, the control range of the coil unit 30b amounts to (x_Max - x_Min) along the axis x.

Figure 3b shows a schematic side view of the linear motion system of figure 2 indicating the overlap range of two coil units. Usually, two neighbouring coil units are arranged so that an overlap control range exists, wherein a carrier unit is within the control range of both coil units. In the shown embodiment, the two neighbouring coil units 30a and 30b are involved. The carrier unit 10b enters the overlap range of the two coil units 30a and 30b, when it enters the control range of the coil unit 30b still being under control by coil unit 30a. This position corresponds to x1 (=x_Min). Furthermore, the carrier unit 10b leaves the overlap range of the two coil units 30a and 30b, when it leaves the control range of the coil unit 30a, subsequently only being under control by coil unit 30b. This position corresponds to x2. Therefore, the overlap range of two neighbouring coil units amounts to (x2 - x1)=hyst along the axis x.

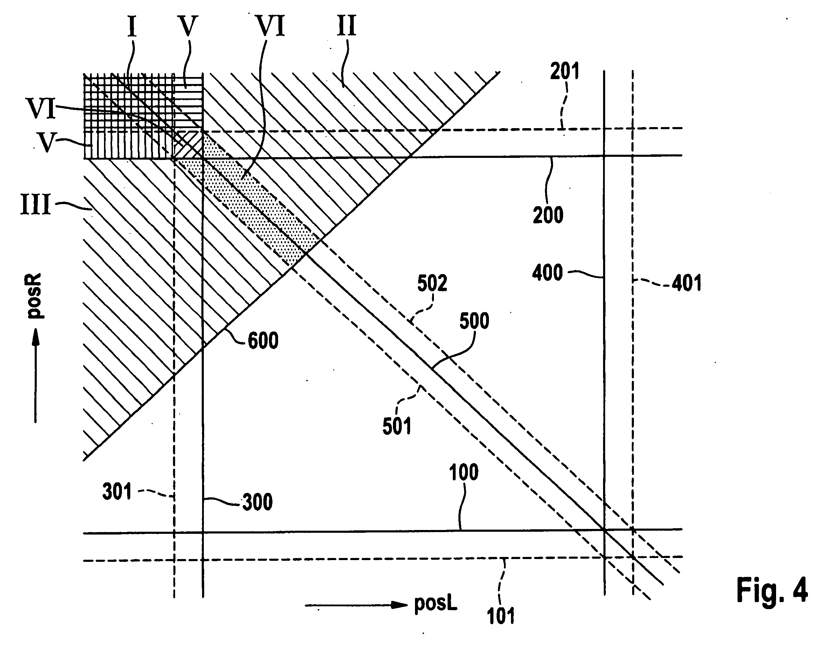

Figure 4 shows a diagram, wherein different handling strategies are viewed as a function of the position of two neighbouring carrier units. The diagram is calculated for an LMS arrangement according to one of Figures 2, 3a, and 3b, wherein one sensor unit is arranged at each end of a coil unit. The (posL,posR) plane is visualized, where posL and posR indicate the measured positions of the left and right carrier, respectively.

The square encompassed by lines 100, 200, 300, and 400 indicates the coil control range for posL and posR. Line 100 corresponds to posR = x_Min, line 200 corresponds to posR = x_Max, line 300 corresponds to posL = x_Min, and line 400 corresponds to posL = x_Max.

The square encompassed by lines 101, 201, 301, and 401 indicates the coil control range including the hysteresis zone. Line 101 corresponds to posR = x_Min-hyst, line 201 corresponds to posR = x_Max+hyst, line 301 corresponds to posL = x_Min-hyst, and line 401 corresponds to posL = x_Max+hyst, with hyst being the the overlap range.

Line 500 indicates the line at which posL and posR have equal distances to the centre of the coil control range. Above this line, the left sensor position is closer to the centre, so the left carrier is the primary candidate for closed loop control. Below this line, the right sensor position is closer to the centre, so the right carrier is the primary candidate for closed loop control. To avoid switching of the control from one carrier to another, when the carriers are close to the line, also here a hysteresis zone is taken into account between lines 501 and 502. The size of these hysteresis zone can be freely predefined.

Line 600 indicates the position of the left and right carrier when they are moving adjacently. Below line 600, the carriers have overlap, or the left carrier is to the right of the right carrier. Obviously, this is physically not possible. So the area above line 600 is the interesting part of the (posL,posR) plane.

Within area I, both carriers are outside of the coil control range and of the hysteresis zone. Therefore, no carrier is controlled.

Within area II, where posL > x_Min AND

posR+posL > x_Min+x_Max+hyst, the left carrier is controlled.

Within area III, where posR > x_Max AND

posR+posL < x_Min+x_Max-hyst, the right carrier is controlled.

Within area IV, the left carrier cannot be controlled, as posL < x_Min-hyst. The right carrier is in hysteresis zone and may remain in closed loop, but is not switched to closed loop.

Within area V, the right carrier cannot be controlled, as posR > x_Max+hyst. The left carrier is in hysteresis zone and may remain in closed loop, but is not switched to closed loop.

Within area VI, if the left or right carrier is being controlled, this remains unchanged in this hysteresis area. If no carrier was under control, control changes to the carrier which is closest to the centre of the coil control range.

In area VII, the carrier that is being controlled, if any, remains controlled. In case no carrier was controlled, no carrier gains control.

The described steps of the method according to the invention may be performed in combination, in different order or alone. Use of the method is not limited to the field of semiconductor coating and the scope of the invention is only limited by the appended claims.

## Claims

1. Method of controlling a linear motion system (1) having a linear synchronous motor comprising a stator (2a, 2b, 2c, 2d; 3) and at least two carrier units (10a, ..., 10k) moveable in relation to said stator (2a, 2b, 2c, 2d; 3),
said stator (2a, 2b, 2c, 2d; 3) comprising at least one coil unit (30a, 30b, 30c) including at least one sensor unit (7a, 7b, 7c) for determining the position of said at least one carrier unit (10a, ..., 10k) and at least one coil (5a, 5b, 5c) for moving said at least one carrier unit (10a, ..., 10k),
wherein in case at least two different carrier units are within a control range (100, 200, 300, 400; x_Max-x_Min) of one coil unit, the carrier unit to be controlled by said coil unit is determined as a function of the position (posL; posR; x) of said carrier units,
wherein, if at least two carrier units are within the control range (100, 200, 300, 400) of one coil unit, the carrier unit closest to the centre (500) of said coil unit is controlled by said coil unit, except if the difference between the distance of another carrier unit actually controlled from the centre (500) and the distance of said carrier unit closest to the centre (500) from the centre (500) is within a predefined hysteresis zone, in which case said coil unit continues to control said another carrier unit.

2. Method according to claim 1, wherein, if at least two carrier units are within the control range (100, 200, 300, 400) of one coil unit, the carrier unit closest to the centre (500) of said coil unit is controlled by said coil unit, except if another carrier unit controlled by said coil unit is within a predefined area (502-501) around said centre (500) of said coil unit, in which case said coil unit continues to control said another carrier unit.

3. Method according to claim 1 or 2, wherein in case a carrier unit (10b) is within an overlap control range (x2-xl) of two different coil units (30b; 30a), the coil unit, which is to control said carrier unit (10b), is determined as a function of the position (x) of said carrier unit (10b).

4. Method according to any one of the preceding claims,
wherein in case a carrier unit (10b) is within an overlap control range (x2-x1) of at least two different coil units (30b; 30a), the coil unit, which is to control said carrier unit (10b), is determined as a function of the position (x) of said carrier unit (10b).

5. Method according to claim 4 or 5, wherein a carrier unit controlled by a first coil unit being within the overlap control range of said first coil unit and a second coil unit is continuously controlled by said the first coil unit.

6. Method according to claim 4, 5 or 6, wherein a carrier unit under control of a first coil unit leaving the overlap control range of said first coil unit and a second coil unit is subsequently controlled by said second coil unit.

7. Method according any one of the preceding claims, wherein said at least one carrier unit (10a, ..., 10k) comprises a magnetic unit (6a, 6b) including an array or a series of alternate-pole magnets (6a', 6a"; 6b', 6b").

8. Apparatus configured to control a linear motion system (1) having a linear synchronous motor comprising a stator (2a, 2b, 2c, 2d; 3) and at least two carrier units (10a, ..., 10k) moveable in relation to said stator (2a, 2b, 2c, 2d; 3),
said stator (2a, 2b, 2c, 2d; 3) comprising at least one coil unit (30a, 30b, 30c) including at least one sensor unit (7a, 7b, 7c) for determining the position of said at least one carrier unit (10a, ..., 10k) and at least one coil (5a, 5b, 5c) for moving said at least one carrier unit (10a, ..., 10k),
the apparatus further comprising means arranged to determine
the carrier unit to be controlled by said coil unit as a function of the position (posL; posR; x) of said carrier units,
in case at least two different carrier units are within a control range (100, 200, 300, 400; x_Max-x_Min) of one coil unit,
wherein, if at least two carrier units are within the control range (100, 200, 300, 400) of one coil unit, the carrier unit closest to the centre (500) of said coil unit is controlled by said coil unit, except if the difference between the distance of another carrier unit actually controlled from the centre (500) and the distance of said carrier unit closest to the centre (500) from the centre (500) is within a predefined hysteresis zone, in which case
said coil unit continues to control said another carrier unit.

9. Computer program comprising program code means for performing all steps of a method according to one of the claims 1 to 7, when the computer program is executed on a computer or a corresponding processing unit.

10. Computer program product comprising program code means stored on a computer readable data carrier, for performing all steps of a method according to one of the claims 1 to 7, when the computer program is executed on a computer or a corresponding processing unit.

## Patentansprüche

1. Verfahren zum Steuern eines linearen Bewegungssystems (1), das einen linearen Synchronmotor aufweist, der einen Stator (2a, 2b, 2c, 2d; 3) und wenigstens zwei Trägereinheiten (10a, ..., 10k), die relativ zum Stator (2a, 2b, 2c, 2d; 3) beweglich sind, umfasst,
wobei der Stator (2a, 2b, 2c, 2d; 3) wenigstens eine Spuleneinheit (30a, 30b, 30c) umfasst, die wenigstens eine Fühlereinheit (7a, 7b, 7c) zum Bestimmen der Position der wenigstens einen Trägereinheit (10a, ..., 10k) und der wenigstens einen Spule (5a, 5b, 5c) aufweist, um die wenigstens eine Trägereinheit (10a, ..., 10k) zu bewegen,
wobei in dem Fall, in dem sich wenigstens zwei verschiedene Trägereinheiten innerhalb des Steuerbereichs (100, 200, 300, 400; x_Max-x_Min) einer Spuleneinheit befinden, die Trägereinheit, die durch die Spuleneinheit gesteuert werden soll, als Funktion der Position (posL; posR; x) der Trägereinheiten bestimmt wird,
wobei dann, wenn sich wenigstens zwei Trägereinheiten innerhalb des Steuerbereichs (100, 200, 300, 400) einer Spuleneinheit befinden, die Trägereinheit, die dem Zentrum (500) der Spuleneinheit am nächsten ist, durch die Spuleneinheit gesteuert wird, außer wenn der Unterschied zwischen dem Abstand einer weiteren Trägereinheit, die gegenwärtig gesteuert wird, vom Zentrum (500) und der Abstand der Trägereinheit, die dem Zentrum (500) am nächsten ist, vom Zentrum (500) innerhalb eines vorgegebenen Hysterese-Bereichs liegen, wobei in diesem Fall die Spuleneinheit weiterhin die weitere Trägereinheit steuert.

2. Verfahren nach Anspruch 1, wobei, wenn sich wenigstens zwei Trägereinheiten innerhalb des Steuerbereichs (100, 200, 300, 400) einer Spuleneinheit befinden, die Trägereinheit, die dem Zentrum (500) der Spuleneinheit am nächsten ist, durch die Spuleneinheit gesteuert wird, außer wenn sich eine weitere Trägereinheit, die von der Spuleneinheit gesteuert wird, innerhalb eines vorgegebenen Bereichs (502-501) um das Zentrum (500) der Spuleneinheit befindet, wobei in diesem Fall die Spuleneinheit weiterhin die weitere Trägereinheit steuert.

3. Verfahren nach Anspruch 1 oder 2, wobei in dem Fall, in dem sich eine Trägereinheit (10b) innerhalb eines überlappenden Steuerbereichs (x2-x1) von zwei verschiedenen Spuleneinheiten (30b; 30a) befindet, die Spuleneinheit, die die Trägereinheit (10b) steuern soll, als Funktion der Position (x) der Trägereinheit (10b) bestimmt wird.

4. Verfahren nach einem der vorhergehenden Ansprüche, wobei in dem Fall, in dem sich eine Trägereinheit (10b) innerhalb eines überlappenden Steuerbereichs (x2-x1) von wenigstens zwei verschiedenen Spuleneinheiten (30b; 30a) befindet, die Spuleneinheit, die die Trägereinheit (10b) steuern soll, als Funktion der Position (x) der Trägereinheit (10b) bestimmt wird.

5. Verfahren nach Anspruch 4 oder 5, wobei eine Trägereinheit, die von einer ersten Spuleneinheit gesteuert wird und die sich innerhalb des überlappenden Steuerbereichs der ersten Spuleneinheit und einer zweiten Spuleneinheit befindet, ununterbrochen von der ersten Spuleneinheit gesteuert wird.

6. Verfahren nach Anspruch 4, 5 oder 6, wobei eine Trägereinheit, die von einer ersten Spuleneinheit gesteuert wird und den überlappenden Steuerbereich der ersten Spuleneinheit und einer zweiten Spuleneinheit verlässt, anschließend von der zweiten Spuleneinheit gesteuert wird.

7. Verfahren nach einem der vorhergehenden Ansprüche, wobei die wenigstens eine Trägereinheit (10a, ..., 10k) eine Magneteinheit (6a, 6b) umfasst, die eine Gruppe oder eine Reihe von alternierend gepolten Magneten (6a', 6a"; 6b', 6b") aufweist.

8. Vorrichtung, die konfiguriert ist, um ein lineares Bewegungssystems (1) zu steuern, das einen linearen Synchronmotor aufweist, der einen Stator (2a, 2b, 2c, 2d; 3) und wenigstens zwei Trägereinheiten (10a, ..., 10k), die relativ zum Stator (2a, 2b, 2c, 2d; 3) beweglich sind, umfasst,
wobei der Stator (2a, 2b, 2c, 2d; 3) wenigstens eine Spuleneinheit (30a, 30b, 30c) umfasst, die wenigstens eine Fühlereinheit (7a, 7b, 7c) zum Bestimmen der Position der wenigstens einen Trägereinheit (10a, ..., 10k) und der wenigstens einen Spule (5a, 5b, 5c) aufweist, um die wenigstens eine Trägereinheit (10a, ..., 10k) zu bewegen,
wobei die Vorrichtung ferner Mittel umfasst, die dazu ausgelegt sind, die Trägereinheit, die von der Spuleneinheit gesteuert werden soll, als Funktion der Position (posL; posR; x) der Trägereinheiten zu bestimmen,
in dem Fall, in dem sich wenigstens zwei verschiedene Trägereinheiten innerhalb des Steuerbereichs (100, 200, 300, 400; x_Max-x_Min) einer Trägereinheit befinden,
wobei dann, wenn sich wenigstens zwei Trägereinheiten innerhalb des Steuerbereichs (100, 200, 300, 400) einer Spuleneinheit befinden, die Trägereinheit, die dem Zentrum (500) der Spuleneinheit am nächsten ist, durch die Spuleneinheit gesteuert wird, außer wenn der Unterschied zwischen dem Abstand einer weiteren Trägereinheit, die gegenwärtig gesteuert wird, vom Zentrum (500) und der Abstand der Trägereinheit, die dem Zentrum (500) am nächsten ist, vom Zentrum (500) innerhalb eines vorgegebenen Hysterese-Bereichs liegen, wobei in diesem Fall die Spuleneinheit weiterhin die weitere Trägereinheit steuert.

9. Computerprogramm, das Programmcodemittel umfasst, um alle Schritte eines Verfahrens gemäß einem der Ansprüche 1 bis 7 durchzuführen, wenn das Computerprogramm auf einem Computer oder einer entsprechenden Verarbeitungseinheit ausgeführt wird.

10. Computerprogrammprodukt, das Programmcodemittel umfasst, die auf einem computerlesbaren Datenträger gespeichert sind, um alle Schritte eines Verfahrens gemäß einem der Ansprüche 1 bis 7 durchzuführen, wenn das Computerprogrammprodukt auf einem Computer oder einer entsprechenden Verarbeitungseinheit ausgeführt wird.

## Revendications

1. Procédé de commande d'un système à mouvement linéaire (1) possédant un moteur linéaire synchrone comprenant un stator (2a, 2b, 2c, 2d ; 3) et au moins deux modules supports (10a, ..., 10k) mobiles par rapport audit stator (2a, 2b, 2c, 2d ; 3),
ledit stator (2a, 2b, 2c, 2d ; 3) comprenant au moins un module à bobine(s) (30a, 30b, 30c) comportant au moins un module capteur (7a, 7b, 7c) servant à établir la position dudit au moins un module support (10a, ..., 10k) et au moins une bobine (5a, 5b, 5c) servant à déplacer ledit au moins un module support (10a, ..., 10k),
si au moins deux modules supports différents se situent à une portée de commande (100, 200, 300, 400 ; x_Max-x_Min) d'un module à bobine(s), le module support à commander par ledit module à bobine(s) étant établi en fonction de la position (posL ; posR ; x) desdits modules supports,
si au moins deux modules supports se situent à la portée de commande (100, 200, 300, 400) d'un module à bobine(s), le module support le plus proche du centre (500) dudit module à bobine(s) étant commandé par ledit module à bobine(s), sauf si la différence entre la distance d'un autre module support effectivement commandé par rapport au centre (500) et la distance dudit module support le plus proche du centre (500) par rapport au centre (500) s'inscrit dans une région d'hystérésis prédéfinie, auquel cas ledit module à bobine(s) continue de commander ledit autre module support.

2. Procédé selon la revendication 1, si au moins deux modules supports se situent à la portée de commande (100, 200, 300, 400) d'un module à bobine(s), le module support le plus proche du centre (500) dudit module à bobine(s) étant commandé par ledit module à bobine(s), sauf si un autre module support commandé par ledit module à bobine(s) se situe à l'intérieur d'une zone prédéfinie (502-501) entourant ledit centre (500) dudit module à bobine(s), auquel cas ledit module à bobine(s) continue de commander ledit autre module support.

3. Procédé selon la revendication 1 ou 2,
au cas où un module support (10b) se situe à une portée de commande en chevauchement (x2-x1) de deux modules à bobine(s) différents (30b ; 30a), le module à bobine(s) appelé à commander ledit module support (10b) étant établi en fonction de la position (x) dudit module support (10b).

4. Procédé selon l'une quelconque des revendications précédentes,
au cas où un module support (10b) se situe à une portée de commande en chevauchement (x2-x1) d'au moins deux modules à bobine(s) différents (30b ; 30a), le module à bobine(s) appelé à commander ledit module support (10b) étant établi en fonction de la position (x) dudit module support (10b).

5. Procédé selon la revendication 4 ou 5, un module support commandé par un premier module à bobine(s) se trouvant à la portée de commande en chevauchement dudit premier module à bobine(s) et d'un deuxième module à bobine(s) étant commandé de façon continue par ledit premier module à bobine(s).

6. Procédé selon la revendication 4, 5 ou 6, un module support sous la commande d'un premier module à bobine(s) sortant de la portée de commande en chevauchement dudit premier module à bobine(s) et d'un deuxième module à bobine(s) étant par la suite commandé par ledit deuxième module à bobine(s).

7. Procédé selon l'une quelconque des revendications précédentes, ledit au moins un module support (10a, ..., 10k) comportant un module magnétique (6a, 6b) comportant un réseau ou une série d'aimants à pôles alternés (6a', 6a" ; 6b', 6b").

8. Appareil conçu pour commander un système à mouvement linéaire (1) possédant un moteur linéaire synchrone comprenant un stator (2a, 2b, 2c, 2d ; 3) et au moins deux modules supports (10a, ..., 10k) mobiles par rapport audit stator (2a, 2b, 2c, 2d ; 3),
ledit stator (2a, 2b, 2c, 2d ; 3) comprenant au moins un module à bobine(s) (30a, 30b, 30c) comportant au moins un module capteur (7a, 7b, 7c) servant à établir la position dudit au moins un module support (10a, ..., 10k) et au moins une bobine (5a, 5b, 5c) servant à déplacer ledit au moins un module support (10a, ..., 10k),
l'appareil comprenant en outre des moyens adaptés à établir le module support à commander par ledit module à bobine(s) en fonction de la position (posL ; posR ; x) desdits modules supports, si au moins deux modules supports différents se situent à une portée de commande (100, 200, 300, 400 ; x_Max-x_Min) d'un module à bobine(s),
si au moins deux modules supports se situent à la portée de commande (100, 200, 300, 400) d'un module à bobine(s), le module support le plus proche du centre (500) dudit module à bobine(s) étant commandé par ledit module à bobine(s), sauf si la différence entre la distance d'un autre module support effectivement commandé par rapport au centre (500) et la distance dudit module support le plus proche du centre (500) par rapport au centre (500) s'inscrit dans une région d'hystérésis prédéfinie, auquel cas ledit module à bobine(s) continue de commander ledit autre module support.

9. Programme d'ordinateur, comprenant un moyen formant code de programme servant à mettre en oeuvre toutes les étapes d'un procédé selon l'une des revendications 1 à 7, lorsque le programme d'ordinateur est exécuté sur un ordinateur ou une unité de traitement correspondante.

10. Produit-programme d'ordinateur, comprenant un moyen formant code de programme enregistré sur un support de données lisible par ordinateur, servant à mettre en oeuvre toutes les étapes d'un procédé selon l'une des revendications 1 à 7, lorsque le produit-programme d'ordinateur est exécuté sur un ordinateur ou une unité de traitement correspondante.
